# EUROPÄISCHE PATENTSCHRIFT

(11) **EP 2 721 315 B1**
(45) Veröffentlichungstag und Bekanntmachung des Hinweises auf die Patenterteilung: **29.07.2015**
(21) Anmeldenummer: 12746260.4
(22) Anmeldetag: 23.05.2012
(51) Int. Cl.: F16D 25/10, F16D 25/08

(54) **AUSRÜCKSYSTEM FÜR EINE DOPPELKUPPLUNG**
RELEASE SYSTEM FOR A DOUBLE CLUTCH
SYSTÈME DE DÉBRAYAGE POUR EMBRAYAGE DOUBLE

(30) Priorität: 14.06.2011 DE 102011104080
(43) Veröffentlichungstag der Anmeldung: 23.04.2014
(73) Patentinhaber: Schaeffler Technologies AG & Co. KG, 91074 Herzogenaurach (DE)
(72) Erfinder: RAMMHOFER, Thomas, 77880 Sasbach (DE); SEITZ, Martin, 76534 Baden-Baden (DE)
(86) Internationale Anmeldenummer: PCT/DE2012/000530
(87) Internationale Veröffentlichungsnummer: WO 2012/171516

(56) Entgegenhaltungen:
- DE-A1- 10 021 175
- DE-A1-102009 053 486
- DE-A1-102009 056 899
- DE-A1-102010 032 661
- DE-A1-102010 052 386

## Beschreibung

Die Erfindung betrifft ein Ausrücksystem für eine Doppelkupplung mit den Merkmalen des Oberbegriffs des Anspruchs 1 und des Anspruchs 8.

Eine Doppelkupplung umfasst im Wesentlichen zwei separate Kupplungseinheiten, die unabhängig voneinander über eine jeweils zugeordnete Ausrück- bzw. Einrückvorrichtung eine Verbindung zu einer Getriebeeingangswelle unterbrechen und herstellen können. Die Unterscheidung zwischen Ausrück- bzw. Einrückvorrichtung bezieht sich in erster Linie auf die Funktionsweise der Kupplung als normalerweise offene Kupplung (normally opened clutch) und normalerweise geschlossene Kupplung (normally closed clutch). Eine normalerweise offene Kupplung ist im drucklosem,Zustand des Einrücksystems geöffnet, durch Betätigung des Einrücksystems wird ein Einrückkolben auf eine Hebeifeder gepresst, die dann die Druckplatten gegen die Reibplatte presst und so die Kupplung zur Momentenübertragung schließt. Eine normalerweise geschlossene Kupplung ist im drucklosen Zustand des Ausrücksystems geschlossen, durch Betätigung des Ausrücksystems wird der Ausrückkolben gegen eine Tellerfeder geschoben, die sich daraufhin von den Kupplungsdruckplatten abhebt und so die Öffnung der Kupplung ermöglicht. Doppelkupplungen bestehen aus zwei Teilkupplungen, die jeweils als normally opened oder normaly closed Kupplung ausgeführt sein können. Die grundsätzliche Funktionsweise von Ausrück- und Einrückvorrichtung ist jeweils identisch, sodass der im Folgenden allgemein benutzte Begriff Ausrücker oder Ausrücksysteme sowohl Ausrücker als auch Einrücker bzw. Ausrücksysteme und Einrücksysteme umfassen soll.

Ein bevorzugtes Einsatzgebiet einer Doppelkupplung ist die Verwendung in einem Doppelkupplungsgetriebe. Die erste Kupplungseinheit bedient hierbei üblicherweise die ungeraden Gangstufen und die zweite Kupplungseinheit die geraden Gangstufen. Auf diese Weise kann, während über die eine Kupplungseinheit aktuell das Drehmoment vom Motor auf das Getriebe übertragen wird, bereits eine andere Gangstufe vorgewählt werden, um anschließend ohne Unterbrechung der Zugkraft von der aktuellen Gangstufe in die vorgewählte Gangstufe schalten zu können. Die Getriebeeingangswelle ist hierfür vorzugsweise aus zwei konzentrischen Wellen zusammengesetzt, das heißt aus einer Hohlwelle mit einer innen liegenden Vollwelle.

Eine solche Doppelkupplung ist bereits aus der DE 101 164 705 A1 bekannt. Zur Betätigung der Kupplungseinheiten sind dieser zwei konzentrisch zueinander angeordneten Nehmerzylinderkolben bzw. Stellkolben, das heißt ein innerer Nehmerzylinderkolben und ein äußerer Nehmerzylinderkolben, vorgesehen. Der innere und der äußere Nehmerzylinderkolben werden jeweils in einem ringzylindrischen Zylindergehäuse geführt. Dieser auf diese Art und Weise aufgebaute Nehmerzylinder wird auch als CSC (concentrate slave cylinder) bezeichnet. Die beiden Zylindergehäuse sind somit ebenfalls konzentrisch zueinander angeordnet und bilden einen inneren Nehmerzylinder und einen äußeren Nehmerzylinder, in dem die Nehmerzylinderkolben relativ zueinander axial beweglich angeordnet sind.

Aus der DE 10 2005 008 662 A1 ist bekannt, die ringförmigen, konzentrischen Nehmerzylinderkolben, die jeweils mit einem Ausrücklager in Wirkverbindung stehen, in einem gemeinsamen Gehäuse zu einer kompakten Baueinheit zusammen zu fassen. Bei der Betätigung des Ausrücksystems wird über das der vorderen Stirnseite des Nehmerzylinderkolbens angeordnete, korrespondierende Ausrücklager vom zweiten Nehmerzylinderkolben, der beispielsweise für die Einlegung des ersten Ganges zuständig ist, eine Öffnungskraft auf die entsprechende Kupplungseinheit der Doppelkupplung übertragen. Zur Vermeidung der Übertragung einer Drehbewegung, insbesondere von der anderen Kupplungseinheit der Doppelkupplung auf den zweiten Nehmerzylinderkolben, wird beispielsweise entweder ein Lagerring des Ausrücklagers rotatorisch fixiert oder zumindest der zweite Nehmerzylinderkolben rotatorisch über einen Hebelarm fixiert, der sich auf der Mantelfläche des Nehmerzylindergehäuses des Ausrücksystems abstützt. Allerdings führt die Fixierung des Nehmerzylinderkolbens über einen außerhalb der Mantelfläche des Ausrücksystems angebrachten Hebelarm zu einer radialen Bauraumvergrößerung des Ausrücksystems.

Es ist auch bekannt, z.B aus der DE 10 2009053486 A1 bei einem CSC die rotatorische Verdrehung des kolbenseitigen Lagerrings durch das Schleppmoment des Ausrücklagers mittels der Vorlastfeder, mit der das Ausrücklager gegen die Kupplungsfeder gepresst wird, abzustützen. Allerdings benötigt auch die Vorlastfeder radialen Bauraum, der bei Doppelkupplungsanwendungen in der Regel nicht vorhanden ist, sodass eine Schleppmomentabstützung über die Vorlastfeder bei Doppelkupplungsanwendung in der Regel nicht durchgeführt werden kann.

Es werden daher bei Ausrücksystemen für Doppelkupplungen häufig formschlüssige, nicht elastische Verbindungen zur Schleppmomentabstützung genutzt. Dabei weisen die Ringkolben eine Aussparung auf, in die eine entsprechende komplementäre Erhebung am Ausrückergehäuse eingreift und so eine Verdrehung der Kolben relativ zum Gehäuse verhindert. Da ein derartiger Vorsprung das Einsetzen der Ringkolben in den zugehörigen Zylinderraum verhindern würde, die Ausbildung der Vorsprünge erst nach dem Einsetzten der Zylinderkoben in das Ausrückergehäuse erfolgt. Hierzu kann beispielsweise ein Aluminiumring, der entsprechende Vorsprünge auf seinem Außenumfang aufweist, durch Erwärmung in seinem Umfang vergrößert auf das Gehäuse aufgesetzt und anschließend abgekühlt werden, sodass durch ???(8.02) das Drehmoment über den Formschluss zwischen Vorsprung und Vertiefung und dem Reibschluss des Aluminiumrings mit dem Ausrückergehäuse übertragen werden kann. Allerdings ist die Montage des Rings aufwendig und verlangt die Einhaltung relativ geringer Toleranzgrenzen.

Es besteht daher die Aufgabe, eine Schleppmomentabstützung für ein Ausrücksystem für eine Doppelkupplung zur Verfügung zu stellen, das ohne Vorlastfeder und ohne eine aufwendige Presspassung für einen Aluminiumring zur Realisierung der Momentenabstützung auskommt.

Die Lösung dieser Aufgabe gelingt mit dem Ausrücksystem gemäß Anspruch 1 und gemäß Anspruch 8. Vorteilhafte Weiterbildungen ergeben sich aus den Unteransprüchen.

Ein erfindungsgemäßes Ausrücksystem für eine Doppelkupplung weist ein Ausrückergehäuse auf, in dem konzentrisch zwei ringförmige Kolben geführt sind. Am kupplungsseitigen Ende der Kolben finden sich zwei konzentrisch angeordnete Ausrücklager, die zur Anlage an die Teller- bzw. Hebelfedern der Teilkupplungen einer Doppelkupplung ausgebildet sind Zwischen den ausrückerseitigen Lagerringen der Ausrücklager und dem Ausrückergehäuse ist eine Reibfläche gebildet, die eine Beschaffenheit aufweist, mittels derer ein hoher Reibwert zwischen den beiden Berührungsflächen erzielt wird.

Im nicht ausgerückten Zustand entsteht daher zwischen den Oberflächen des Ausrückergehäuses und des ausrückerseitigen Lagerrings des Ausrücklagers ein Reibschluss, der ein dem Schleppmoment entgegenstehendes Haltemoment erzeugt, so dass ein Verdrehen des ausrückerseitigen Lagerrings des Ausrücklagers durch das Lagerschleppmoment verhindert wird. Die dafür notwendige Normalkraft wird durch die Hebel- oder Tellerfeder der Kupplung auf das Ausrücklager aufgebracht.

Für das durch den Reibschluss erzeugte Haltemoment ist es allerdings notwendig, dass die Oberflächen von Lagerring und Gehäuse gegeneinander gepresst werden. Dies ist im drucklosen, also nicht ausgerückten Zustand des Ausrückers der Fall. Wird nun im Ausrückerkolben ein Druck erzeugt, so verringert sich die Haltekraft auf den Lagerring entsprechend, bis bei ausreichendem Druck auf den Ausrückerkolben der Lagerring ganz von dem Gehäuse abgehoben wird, so dass kein Haltmoment mehr über den Reibschluss erzeugt werden kann. Um auch in diesem Falle eine Verdrehung des Lagerrings zu verhindern, wird eine Verdrehsicherung zwischen dem ausrückerseitigen Lagerring des ersten Ausrücklagers und dem ausrückerseitigen Lagerring des zweiten Ausrücklagers vorgesehen. Diese Verbindung ist dazu ausgebildet, eine Verdrehung der beiden Lagerringe über einen geringen Toleranzbereich hinaus zu verhindern, während eine Relativbewegung in axialer Richtung sowie ein Kippen der Lagerringe gegeneinander nicht oder nur sehr geringfügig behindert wird. Über diese Verdrehsicherung zwischen den beiden Lagerringen wird eine Verdrehung eines Lagerrings zu Betätigungsbeginn des entsprechenden Teilausrückers vermieden.

Bei weiter ansteigendem Druck im Ausrückerkolben erhöht sich der Druck auf die Zylinderdichtung, sodass sich deren Aufstandfläche an der Zylinderwand vergrößert und entsprechend einen Reibungswiderstand zwischen Kolbendichtung und Ausrückergehäuse entsteht. Da die Kobendichtung über den Ausrückerkolben mit dem ausrückerseitigen Lagerring in Wirkverbindung steht, kann ab einem bestimmten Arbeitsdruck im Ausrückkolben das Schleppmoment über ein entsprechendes Haltemoment im Ausrückkolben abgestützt werden. Somit besteht die Notwendigkeit der Abstützung des Lagerrings über die verdrehsichere Verbindung mit dem zweiten Lagerring nur für einen vergleichsweise kurzen Teil des Ausrückvorgangs. Im voll ausgerückten Zustand hingegen ist die Reibung der Ringkolbendichtung an der Zylinderwand ausreichend zur Schleppmomentabstützung, ebenso wie im vollständig nicht ausgerückten Zustand der Reibschluss zwischen Lagerring und Ausrückergehäuse zur Schleppmomentabstützung ausreichend ist.

Beim Betrieb der Kupplung können in Grenzsituationen, beispielsweise bei extrem niedrigen Temperaturen, kurzfristige Schleppmomenterhöhungen auftreten. Das Reibmoment zwischen Ausrücklagerring und Ausrückergehäuse ist aber in jedem Falle größer als das Reibmoment zwischen Kupplung und dem kupplungsseitigen Lagerring des Ausrücklagers, sodass es in diesem Fall zu einem Durchrutschen der Teller-/Hebelfeder auf dem Ausrücklagerring kommt. Hierdurch ist ein Überlastschutz für den ausrückerseitigen Lagerring auch bei Grenzbedingungen für das Schleppmoment jederzeit gegeben.

Es ist grundsätzlich möglich, zur Erhöhung des Reibschlusses die Oberfläche des Ausrückergehäuses und/oder des Lagerrings einer besonderen Bearbeitung zu unterziehen oder beispielsweise eine Beschichtung mit hohen Reibungskoeffizienten an einem oder beiden Bauteilen vorzusehen. Ebenso ist es möglich, ein Zusatzelement wie beispielsweise ein Gummibauteil zur Erhöhung des Reibungskoeffizienten zwischen Ausrückergehäuse und Lagerring einzusetzen. Dies bietet den zusätzlichen Vorteil, dass über ein derartiges Zwischenelement ein elastischer Anschlag zum Ausgleich von Bewegungen, Vermeidung von Geräuschen und elastischer Kraftübergabe gebildet werden kann.

Das Verbindungselement zwischen den ausrückerseitigen Lagerringen der Ausrücklager kann entweder formschlüssig, kraftschlüssig oder auch reibschlüssig angebunden werden. Bei einer reibschlüssigen Anbindung kann im Überlastungsfall bei schwer gängigen Ausrücklagern eine eventuelle Beschädigung des Verbindungselements verhindert werden.

Aufgrund der Schleppmomentabstützung rein über die Gehäusereibung und Dichtungsreibung an der Kolbendichtung kann auf eine weitergehende Verdrehsicherung für den Ausrückerkolben verzichtet werden. Der Kolben kann somit im Zylinderraum um die Achse gedreht werden. Dadurch ergibt sich der überraschende Vorteil, dass durch die im Betrieb der Kupplung stattfindenden leichten Verdrehbewegungen des Ausrückerkolbens eventuell vorhandene minimale Riefen oder Schmutzpartikel in der Dichtfläche zwischen Kolbendichtung und Zylinderraum nicht mehr zu Riefen an der Dichtung führen, da je nach Verdrehzustand des Ausrückerkolbens ein anderer Bereich der Dichtung am Riefpunkt zur Anlage kommt. Somit wird der Dichtungsverschleiß stark reduziert und ein vorzeitiger Ausfall des Dichtsystems vermieden.

Zusätzlich kann durch die Vermeidung einer formschlüssigen Abstützung des Zylinderkolbens am Ausrückergehäuse der bei einer formschlüssigen Verbindung unvermeidliche erhebliche Verschleiß durch die Reibung im formschlüssigen Verdrehsicherungsbereich, insbesondere bei Taumelbewegungen des Ausrücklagers, verhindert werden.

In einer alternativen Ausführungsform der Erfindung wird nicht auf den Formschluss verzichtet, aber der aus dem Stand der Technik bekannte Aluminiumring durch Klammern ersetzt, die mittels einer Klemmverbindung auf dem Ausrückergehäuse angebracht werden und in komplementäre Vertiefungen am Zylinderkolben eingreifen

Weitere Vorteile, Merkmale, Merkmalskombinationen und Eigenschaften der Erfindung werden deutlich anhand der nachfolgenden Beschreibung zweier Ausführungsbeispiele, sowie den Zeichnungen.

Diese zeigen in:
- Figur 1: einen Ausrückkolben aus dem Stand der Technik;
- Figur 2: einen erfindungsgemäßen Ausrücker;
- Figur 3: eine alternative Ausführungsform eines erfindungsgemäßen Ausrückers,
- Figur 4: ein Verbindungsmittel zur Schleppmomentabstützung zwischen den Lagerringen der Ausrücklager eines erfindungsgemäßen Ausrückers;
- Figur 5: die Ausrücklager eines erfindungsgemäßen Ausrückers mit montiertem Verbindungselement aus Figur 4;
- Figur 6: eine alternative Ausführungsform der Erfindung mit Klammern zur Verdrehsicherung;
- Figur 7: eine Klammer zum Einsetzen in einen Doppelkupplungs-Ausrücker aus Figur 6.

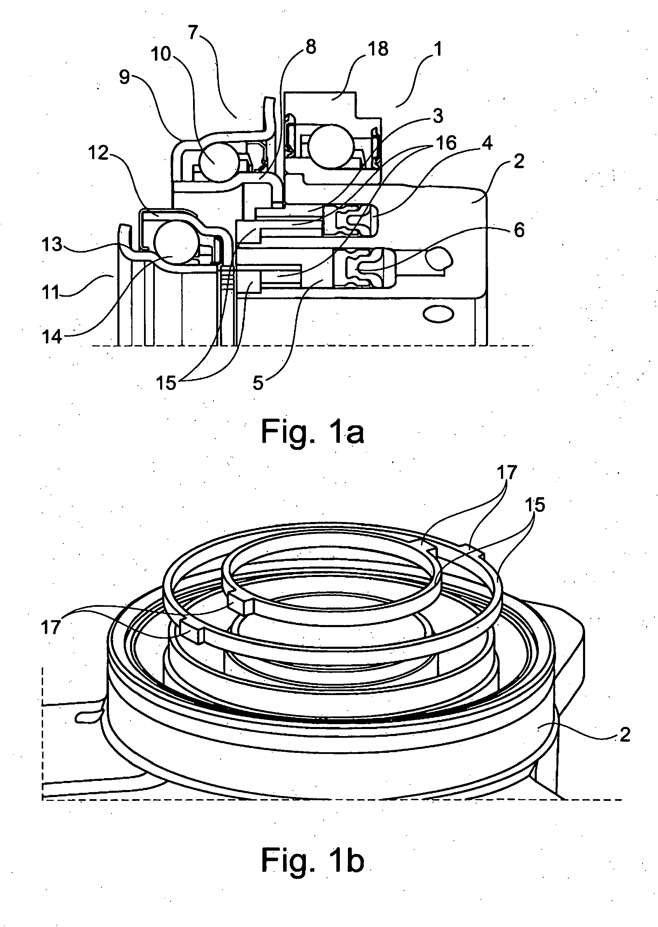

Figur 1 zeigt einen Ausrücker 1 für ein Doppelkupplungssystem, wie er im Stand der Technik bekannt ist. Der Ausrücker weist ein Gehäuse 2 auf, in dem zwei Ringkolben 3, 5 mit Ringkölbendichtungen 4, 6 beweglich geführt sind. Über eine Zuführung (nicht gezeichnet) können die Zylinderräume der Ringkolben 3, 5 jeweils unabhängig voneinander mit Hydraulikfluid befüllt werden. Das der Kupplung zugewandte Ende des Kolbens 3 steht mit einem Ausrücklager 7 in Wirkverbindung. Das Ausrücklager 7 weist dabei einen ausrückerseitigen Lagerring 8, einen kupplungsseitigen Lagerring 9 und Wälzelemente 10 auf, die zum Abwälzen der Bewegung des kupplungsseitigen Lagerrings auf dem ausrückerseitigen Lagerring ausgebildet sind. Entsprechend steht der Ausrückkolben 5 mit einem Ausrücklager 11 in Wirkverbindung, das analog einen ausrückerseitigen Lagerring 12, einen kupplungsseitigen Lagerring 13 und Wälzkörper 14 aufweist.

In den Zylinderkolben 3, 5 befinden sich Vertiefungen 16, in die kongruente Erhebungen 17 von Aluminiumringen 15 greifen. Diese Aluminiumringe werden nach Einschieben der Zylinderkolben 3, 5 in das Ausrückergehäuse 2 auf das Gehäuse aufgebracht (siehe Figur 1 b). Zur Abstützung des Kupplungsdeckels befindet sich ein Deckellager 18 auf dem Gehäuse 2 des Ausrückers.

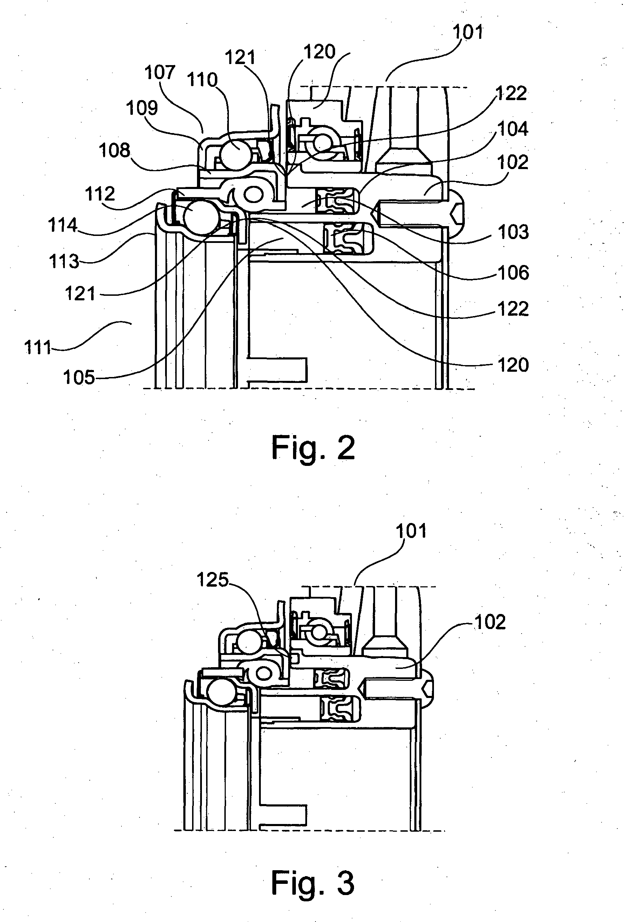

Ein erfindungsgemäßer Ausrücker 101 ist in Figur 2 dargestellt. Der Ausrücker 101 weist ein Ausrückergehäuse 102 auf, in dem analog zum Ausrücker aus dem Stand der Technik zwei ringförmige Ausrückerkolben 103,105 mit Kolbendichtungen 104, 106 geführt sind. Die Ausrückerkolben 103,105 stehen in Wirkverbindung mit den Ausrücklagern 107, 111, die jeweils einen ausrückerseitigen Lagerring 108, 112 und einen kupplungsseitigen Lagerring 109, 113 sowie Wälzkörper 110, 114 aufweisen. Der Lagerring 108, 112 weist jeweils einen Oberflächenbereich 121 auf, der zur Anlage an einen Oberflächenbereich 122 des Ausrückergehäuses 102 in der Berührungsebene 120 zwischen Ausrückergehäuse 102 und den Lagerringen 108 bzw. 112 ausgebildet ist. Dieser Oberflächenbereich weist eine Gestaltung oder Bearbeitung auf, die zu einem hohen Haftreibungsköeffizienten µ zwischen der Lagerringoberfläche 121 und der Gehäuseoberfläche 122 führt.

Insbesondere bieten sich hierbei Oberflächengestaltungen an, die einen Reibungskoeffizienten von 0,15 oder höher aufweisen. Beim drucklosen Ausrücksystem üben die Kolben 103, 105 keine wesentliche Kraft auf die Lagerringe 108, 112 aus. Über die Teller-/Hebelfeder der Kupplung (nicht gezeichnet), die am Lagerring 109 bzw. 113 anliegt, wird aber eine erhebliche Vorspannkraft auf das Ausrücklager aufgebracht, die über die Wälzkörper 110, 114 auf die Lagerringe 108, 112 weiter geleitet werden. Die Lagerringe 108, 112 setzen sich im Bereich der Oberflächen 121, 122 auf dem Gehäuse 102 des Ausrückers 101 ab, sodass ein Reibschluss zwischen den Lagerringen 108, 112 und dem Gehäuse 102 entsteht. Wenn nun durch unvermeidliche Reibung im Ausrücklager bei Rotation der kupplungsseitigen Lagerringe 109, 113 ein immer vorhandenes Schleppmoment auf die ausrückerseitigen Lagerringe 108, 112 übertragen wird, so kann durch den Reibschluss ein entsprechendes Gegenmoment auf der Ausrückerseite aufgebaut werden und derart eine Verdrehung der Lagerringe 108 ,112 verhindert werden.

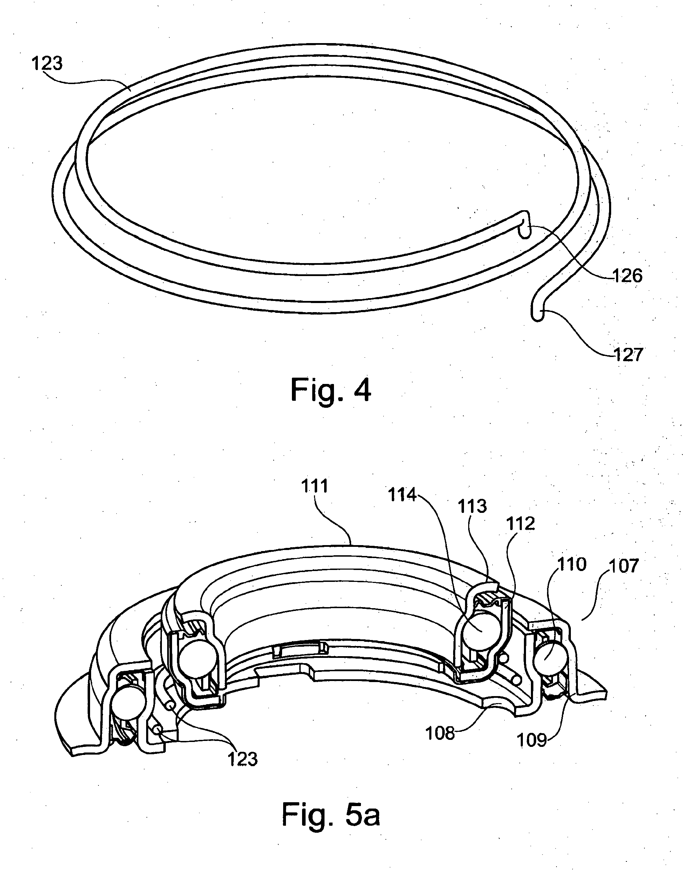

Im Falle einer Betätigung eines Ausrückerkolbens, beispielsweise des Kolbens 3, wird der Druck auf das Hydraulikfluid im Zylinderraum erhöht, wodurch eine Kraft auf den Lagerring 108 des Ausrücklagers 107 entgegen der Vorspannkraft durch die Hebel- bzw. Tellerfeder der Kupplung ausgeübt wird. Dadurch verringert sich der Reibschluss zwischen ausrückerseitigem Lagerring 108 und Gehäuse 102, bis das Reibmoment unter Umständen nicht mehr ausreichend ist, um das Schleppmoment aus dem Ausrücklager 107 zu kompensieren. Es besteht daher die Gefahr, dass bei der Betätigung des Ausrückers 101 ein Verdrehen des ausrückerseitigen Lagerrings 108 auftreten könnte. Um eine derartige Verdrehung auch im Falle der Betätigung des Ausrückers 101 zuverlässig zu vermeiden, wird eine zusätzliche Verdrehsicherung 123 zwischen den ausrückerseitigen Lagerringen 108 und 112 vorgesehen, die in Umfangsrichtung der Lagerringe 107, 111 steif, in radialer und axialer Richtung aber weich ist. Da die Verdrehsicherung 123 auch in Umfangsrichtung eine endliche Steifigkeit aufweist, sind sehr kleine relative Verdrehbewegungen der Lagerringe 107, 111 möglich, die jedoch nicht zu einem merklichen Verschleiß führen. In axialer und radialer Richtung werden die Bewegungen der Ausrücklager 107, 111 gegeneinander durch die Weichheit der Verdrehsicherung 123 in diesen Richtungen kaum merklich behindert. Vorteilhaft kann die Verdrehsicherung 123 als Feder (siehe Figur 4) ausgebildet sein.

Das System aus Kupplung und Teller- bzw. Hebelfeder weist bei einer normalerweise offenen Kupplung je nach Öffnungszustand unterschiedliche Federkonstanten auf. Bei Beginn des Ausrückvorgangs muss vom Ausrücker 101 lediglich die Kraft der Teller-/Hebelfeder überwunden werden. Sobald die Druckplatten auf der oder den Reibplatten in Anlage kommen, steigt die Federkonstante stark an, sodass der Druck im Zylinderraum rapide ansteigt. Durch die dann vorherrschenden hohen Drücke werden die Zylinderdichtungen 104, 106 in Anlage mit der Zylinderwand gedrückt, sodass hier ein Reibschluss entsteht, der eine Verdrehung des ringförmigen Kolbens 103, 105 und somit auch des damit verbundenen ausrückerseitigen Lagerrings 108, 112 über Reibschluss verhindert. Da im Betrieb der Doppelkupplung immer eine Kupplung im geschlossenen, das heißt angepressten Zustand ist, ist somit sicher gestellt, dass entweder über den Reibschluss zwischen ausrückerseitigem Lagerring 108, 112 und Zylindergehäuse 102 oder über die Zylinderdichtung 104, 106 ausreichender Reibschluss aufgebaut wird, um eine Verdrehung der Lagerringe zuverlässig zu verhindern.

Unter bestimmten ungünstigen Bedingungen, beispielsweise sehr niedrigen Temperaturen, kann das Schleppmoment der Ausrücklager 107,111 erhöht werden. In diesem Falle ist aber der Reibschluss zwischen ausrückerseitigem Lagerring 108, 112 und Ausrückergehäuse 102 bzw. Zylinderdichtung 104, 106 und Zylinderwand immer größer als das maximale Reibmoment zwischen Hebel- bzw. Tellerfeder und kupplungsseitigem Ausrücklagerring 109, 113. Im Überlastfall kommt es daher zum Durchrutschen der Hebel- bzw. Tellerfeder auf den kupplungsseitigen Lagerring 109, 113, so dass auch bei ungünstigen Bedingungen eine Überlastschutzfunktion für die Lagerringe 108, 112 und die Verdrehsicherung 123 gegeben ist. Ein kurzzeitiges Durchrutschen der Federzungen auf den kupplungsseitigen Ausrücklagerring 109, 113 ist hierbei tolerabel, da durch unvermeidliche Relativbewegungen von Federzungen und Ausrücklagerring 109, 113 im Betrieb der Kupplung ohnehin unvermeidlicher Verschleiß vorhanden ist und die Bauteile dementsprechend verschleißsicher ausgelegt werden müssen. Das Durchrutschen im seltenen Überlastfall bedeutet hier keine merkliche Verschleißerhöhung, sodass hierdurch keine Lebensdauerverkürzung der Kupplung zu erwarten ist.

Figur 3 zeigt eine Weiterbildung der Ausführungsform aus Figur 2. Zur Erhöhung des maximal abstützbaren Schleppmoments ist hier in der Berührungsebene 120 zwischen dem Lagerring und dem Gehäuse ein Zusatzbauteil 125 angeordnet, das aus einem Material mit hohem Reibbeiwert besteht, vorzugsweise Gummi oder ein elastischer Kunststoff. Da so die Reibkraft und somit das maximal übertragbare Moment zwischen Lagerring und Gehäuse erheblich vergrößert wird, bietet sich diese Weiterbildung an, wenn das Reibmoment zwischen Lagerring und Gehäuse nicht ausreichend zur Abstützung des Schleppmoments ist. Zusätzlich können mit dem Zusatzbauteil Krafteinwirkungen durch Aufschlagen auf das Gehäuse vermindert und Geräusche vermindert werden.

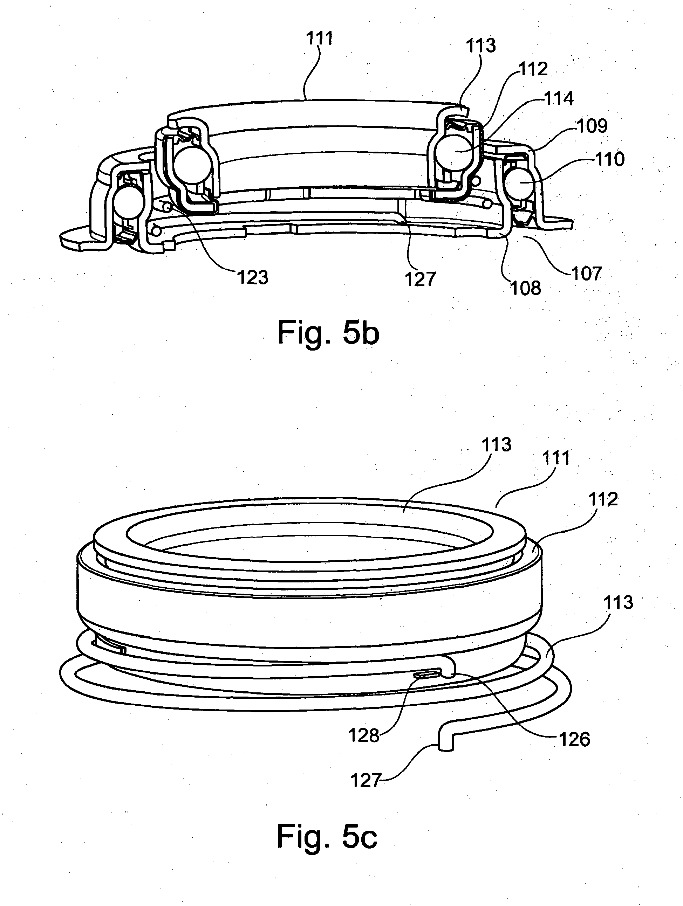

Figur 4 zeigt eine Feder 123 zur Verdrehsicherung, die zwischen zwei Ausrücklagerringen 108, 112 angeordnet werden kann, wie in Figur 5 dargestellt. In Figur 5 ist in Figur 5a ein Schnitt durch zwei Ausrücklager 107, 111 dargestellt, zwischen denen eine Feder 123 gemäß Figur 4 eingesetzt ist. Die Ausrücklager weisen jeweils einen ausrückerseitigen Lagerring 108, 112, einen kupplungsseitigen Lagerring 109, 113 und Wälzkörper 110, 114 auf. Figur 5b zeigt wieder einen Schnitt durch zwei Ausrücklager in einer anderen Perspektive, in der das Ende 127 der Verdrehsicherungsfeder 123 über eine Öffnung formschlüssig mit dem Ausrücklagerring 108 verbunden ist. Die Verbindung zwischen Verdrehsicherungsfeder 123 und dem Ausrücklagerring 112 ist in Figur 5c dargestellt. Ein abgeknicktes Ende 126 der Verdrehsicherungsfeder 123 befindet sich im Eingriff mit einem Vorsprung 128, der auf der Außenseite des ausrückerseitigen Lagerrings 112 angeordnet ist. Alternativ sind natürlich auch andere Befestigungen möglich, beispielsweise mit einer Öse, Verschraubungen, Verrastungen, etc..

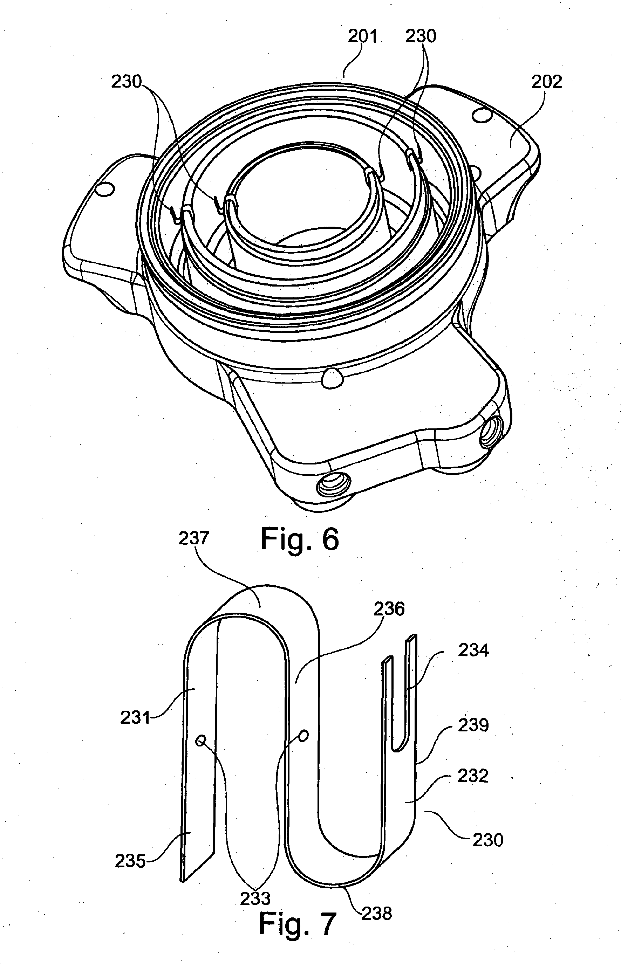

Figur 6 zeigt eine alternative Ausführungsform der Erfindung, bei der die Aluminiumringe im Stand der Technik gemäß Figur 1b durch Klammern 230 ersetzt werden. Nach dem Einsetzen der Ausrückkolben können die Klammern 230 am Ausrückergehäuse 202 befestigt und so die formschlüssige Verdrehsicherung, die in Figur 1a gezeigt ist, sicher stellen.

Figur 7 zeigt eine Klammer 230 zur Festlegung an einem Ausrückergehäuse, um einen Vorsprung zur Schleppmomentabstützung zur Verfügung zu stellen. Die Klammer weist einen Klemmbereich 231 auf, der aus zwei parallel verlaufenden Schenkelbereichen 235 und 236 besteht, die über einen gebogenen Verbindungsbereich 237 miteinander verbunden sind und so einen im Wesentlichen U-förmigen, geöffneten Bereich beschreiben. Am Schenkel 236 schließt sich ein weiterer gebogener Bereich 238 an, der in einen im Wesentlichen zum Schenkel 236 parallelen weiteren Schenkel 239 mündet, der ebenfalls zusammen mit dem Schenkel 236 und dem gebogenen Bereich 238 einen im Wesentlichen U-förmigen Bereich bildet, der aber im Vergleich zum ersten U-förmigen Bereich in der entgegensetzten Richtung geöffnet ist. Somit weist die Klammer eine im Wesentlichen S-förmige Form auf, mit einem Klemmbereich 231 und einem Vorsprungsbereich 232. In den Schenkeln 235 und 236 des Klemmbereichs können Sicken 233 geprägt sein, die für eine bessere Befestigung des Kam-merelements 230 auf dem Ausrückergehäuse 202 (siehe Figur 6) sorgen. Zur Ausbildung der Sicken kann der Schenkel 239 eine Öffnung 234 aufweisen.

### Bezugszeichenliste

- 1: Ausrücker
- 2: Gehäuse
- 3: Ringkolben
- 4: Ringkolbendichtung
- 5: Ringkolben/Ausrückkolben
- 6: Ringkolbendichtung
- 7: Ausrücklager
- 8: ausrückerseitiger Lagerring
- 9: kupplungsseitiger Lagerring
- 10: Wälzelement
- 11: Ausrücklager
- 12: ausrückerseitiger Lagerring
- 13: kupplungsseitiger Lagerring
- 14: Wälzkörper
- 15: Aluminiumring
- 16: Vertiefung
- 17: Erhebung
- 18: Deckellager

- 101: Ausrücker
- 102: Ausrückergehäuse
- 103: Ausrückerkolben
- 104: Kolbendichtung
- 105: Ausrückerkolben
- 106: Kolbendichtung
- 107: Ausrückerlager
- 108: ausrückerseitiger Lagerring
- 109: kupplungsseitiger Lagerring
- 110: Wälzkörper
- 111: Ausrücklager
- 112: ausrückerseitiger Lagerring
- 113: kupplungsseitiger Lagerring
- 114: Wälzkörper
- 120: Berührungsebene
- 121: Lagerringoberfläche
- 122: Gehäuseoberfläche
- 123: Verdrehsicherung
- 126: abgeknicktes Ende
- 127: Ende der Verdrehsicherungsfeder
- 128: Vorsprung

- 230: Klammerelement
- 231: Klemmbereich
- 235: Schenkelbereich
- 236: Schenkelbereich
- 237: Verbindungsbereich
- 238: gebogener Bereich
- 239: Schenkel

## Patentansprüche

1. Ausrücker (101), zur Betätigung einer Doppelkupplung im Antriebsstrang eines Kraftfahrzeugs, zum wahlweisen Trennen und Verbinden zweier Wellen; bestehend aus einem konzentrisch um eine Antriebswelle angeordneten Gehäuse (102), in dem ein ringförmiger Kolben (103) geführt ist, an dessen einem Ende ein erstes Ausrücklager (107) mit einem ausrückerseitigen Lagerring (108), einem kupplungsseitigen Lagerring (109) und Wälzkörpern (110) angeordnet ist, das sich an einer Kupplungsfeder einer Teilkupplung der Doppelkupplung abstützt, und einem zweiten ringförmigen Kolben (105), der einen geringeren Ringdurchmesser als der erste ringförmige Kolben (103) aufweist und mit dem ersten ringförmigen Kolben konzentrisch im Gehäuse (102) geführt ist und an dessen Ende ein zweites Ausrücklager (111) mit einem ausrückerseitigen Lagerring (112), einem kupplungsseitigen Lagerring (113) und Wälzkörper (114) angeordnet ist, das sich an einer Kupplungsfeder einer zweiten Teilkupplung der Doppelkupplung abstützt, **dadurch gekennzeichnet, dass** die Ausrücklager (107,111) im nicht eingerückten Zustand am Gehäuse (102) anliegen und dort mittels Reibschluss an einer Verdrehung gehindert sind, und die ausrückerseitigen Lagerringe (108, 112) mittels einer Verbindung (123) aneinander gekoppelt sind, die in Richtung der Rotation um die Drehachse der Antriebswelle steif und in Richtung der Drehachse der Antriebswelle weich ist.

2. Ausrücker (101) nach Anspruch 1, **dadurch gekennzeichnet, dass** die Verbindung zwischen den ausrückerseitigen Lagerringen (108, 112) mittels einer Feder (123) realisiert ist.

3. Ausrücker (101) nach Anspruch 2, **dadurch gekennzeichnet, dass** die Feder (123) als Drahtformfeder ausgebildet ist, die sich wenigstens um einen Teil des zweiten Kolbens (105) und/oder des zweiten Ausrücklagers (111) erstreckt, wobei ein Ende (126) der Drahtformfeder mit dem ausrückerseitigen Lagerring (108) des ersten Ausrücklagers (107) und das andere Ende (127) der Drahtformfeder mit dem ausrückerseitigen Lagerring (112) des zweiten Ausrücklagers (111) verbunden ist.

4. Ausrücker (101) nach Anspruch 2 oder 3, **dadurch gekennzeichnet, dass** die Feder zwischen dem Außenumfang des zweiten Ausrücklagers (111) und dem Innenumfang des ersten Ausrücklagers (107) angeordnet ist.

5. Ausrücker (101) nach einem der vorangehenden Ansprüche, **dadurch gekennzeichnet, dass** zwischen dem Gehäuse (102) und wenigstens einem Lagering (108,112) eines der Ausrücklager (107,111) ein zusätzliches Bauteil (125) zur Erhöhung des Reibwerts angeordnet ist.

6. Ausrücker (101) nach Anspruch 5, **dadurch gekennzeichnet, dass** das zusätzliche Bauteil (125) aus Kunststoff oder Gummi hergestellt ist.

7. Ausrücker (101) nach einem der vorangehenden Ansprüche, **dadurch gekennzeichnet, dass** die Kolben (103,105) im Gehäuse (102) um die Drehachse der Antriebswelle drehbar gelagert sind.

8. Ausrücker (201), zur Betätigung einer Doppelkupplung im Antriebsstrang eines Kraftfahrzeugs, zum wahlweisen Trennen und Verbinden zweier Wellen, bestehend aus einem konzentrisch um eine Antriebswelle angeordneten Gehäuse (202), in dem ein ringförmiger Kolben geführt ist, an dessen einem Ende ein erstes Ausrücklager angeordnet ist, das sich an einer Teilkupplung der Doppelkupplung abstützt, und einem zweiten ringförmigen Kolben, der einen geringeren Ringdurchmesser als der erste ringförmige Kolben aufweist und mit dem ersten ringförmigen Kolben konzentrisch im Gehäuse geführt ist und an dessen Ende ein zweites Ausrücklager angeordnet ist, das sich an einer zweiten Teilkupplung der Doppelkupplung abstützt, **dadurch gekennzeichnet, dass** die Kolben wenigstens eine Seitenführung aufweisen, und am Gehäuse (202) des Ausrückers (201) Klammerelemente (230) angeordnet sind, die in die Seitenführungen der Kolben eingreifen.

9. Ausrücker (201) nach Anspruch 8, **dadurch gekennzeichnet, dass** die Seitenführung mittels einer Vertiefung oder Nut auf einer in radialer Richtung außen oder innen liegenden Seitenfläche der Kolben ausgebildet ist, und die Klammerelemente (230) für einen Formschluss in Umfangsrichtung der Kolbenseitenwand in die Vertiefung oder Nut eingreifen.

## Claims

1. Clutch operator (101), for actuating a double clutch in the drive train of a motor vehicle, for selectively disconnecting and connecting two shafts, consisting of a housing (102) which is arranged concentrically around a drive shaft and in which an annular piston (103) is guided, at the one end of which a first clutch release bearing (107) with a clutch operator-side bearing ring (108), a clutch-side bearing ring (109) and rolling bodies (110) is arranged, which first clutch release bearing (107) is supported on a clutch spring of a component clutch of the double clutch, and a second annular piston (105) which has a smaller annular diameter than the first annular piston (103) and is guided concentrically in the housing (102) with the first annular piston and at the end of which a second clutch release bearing (111) with a clutch operator-side bearing ring (112), a clutch-side bearing ring (113) and rolling bodies (114) is arranged, which second clutch release bearing (111) is supported on a clutch spring of a second component clutch of the double clutch, **characterized in that** the clutch release bearings (107, 111) bear against the housing (102) in the non-engaged state and are prevented from rotating there by means of a frictional connection, and the clutch operator-side bearing rings (108, 112) are coupled to one another by means of a connection (123) which is rigid in the direction of the rotation about the rotational axis of the drive shaft and is soft in the direction of the rotational axis of the drive shaft.

2. Clutch operator (101) according to Claim 1, **characterized in that** the connection between the clutch operator-side bearing rings (108, 112) is realized by means of a spring (123).

3. Clutch operator (101) according to Claim 2, **characterized in that** the spring (123) is configured as a wireform spring which extends at least over part of the second piston (105) and/or of the second clutch release bearing (111), one end (126) of the wireform spring being connected to the clutch operator-side bearing ring (108) of the first clutch release bearing (107) and the other end (127) of the wireform spring being connected to the clutch operator-side bearing ring (112) of the second clutch release bearing (111).

4. Clutch operator (101) according to Claim 2 or 3, **characterized in that** the spring is arranged between the outer circumference of the second clutch release bearing (111) and the inner circumference of the first clutch release bearing (107).

5. Clutch operator (101) according to one of the preceding claims, **characterized in that** an additional component (125) for increasing the coefficient of friction is arranged between the housing (102) and at least one bearing ring (108, 112) of one of the clutch release bearings (107, 111).

6. Clutch operator (101) according to Claim 5, **characterized in that** the additional component (125) is manufactured from plastic or rubber.

7. Clutch operator (101) according to one of the preceding claims, **characterized in that** the pistons (103, 105) are mounted in the housing (102) such that they can be rotated about the rotational axis of the drive shaft.

8. Clutch operator (201), for actuating a double clutch in the drive train of a motor vehicle, for selectively disconnecting and connecting two shafts, consisting of a housing (202) which is arranged concentrically around a drive shaft and in which an annular piston is guided, at the one end of which a first clutch release bearing is arranged which is supported on a component clutch of the double clutch, and a second annular piston which has a smaller annular diameter than the first annular piston and is guided concentrically in the housing with the first annular piston and at the end of which a second clutch release bearing is arranged which is supported on a second component clutch of the double clutch, **characterized in that** the pistons have at least one lateral guide, and clamp elements (230) which engage into the lateral guides of the pistons are arranged on the housing (202) of the clutch operator (201).

9. Clutch operator (201) according to Claim 8, **characterized in that** the lateral guide is configured by means of a depression or groove on a side face of the pistons which lies on the outside or on the inside in the radial direction, and the clamp elements (230) engage into the depression or groove for a positively locking connection in the circumferential direction of the piston side wall.

## Revendications

1. Dispositif de débrayage (101), pour l'actionnement d'un embrayage double dans la chaîne cinématique d'un véhicule automobile, pour déconnecter et connecter de manière sélective deux arbres, constitué d'un boîtier (102) disposé concentriquement autour d'un arbre d'entraînement, dans lequel boîtier est guidé un piston annulaire (103), à l'une des extrémités duquel est disposé un premier palier de débrayage (107) comprenant une bague de palier (108) côté dispositif de débrayage, une bague de palier (109) côté embrayage et des corps de roulement (110), lequel premier palier de débrayage est supporté sur un ressort d'embrayage d'un embrayage partiel de l'embrayage double, et d'un deuxième piston annulaire (105) qui présente un diamètre annulaire plus petit que le premier piston annulaire (103) et est guidé concentriquement dans le boîtier (102) à l'aide du premier piston annulaire et à l'extrémité duquel est disposé un deuxième palier de débrayage (111) comprenant une bague de palier (112) côté dispositif de débrayage, une bague de palier (113) côté embrayage et des corps de roulement (114), lequel deuxième palier de débrayage est supporté sur un ressort d'embrayage d'un deuxième embrayage partiel de l'embrayage double, **caractérisé en ce que** les paliers de débrayage (107, 111) s'appliquent contre le boîtier (102) à l'état non embrayé et y sont empêchés de tourner par un engagement par friction, et les bagues de palier (108, 112) côté dispositif de débrayage sont accouplées l'une à l'autre au moyen d'une connexion (123) qui est rigide dans la direction de la rotation autour de l'axe de rotation de l'arbre d'entraînement et souple dans la direction de l'axe de rotation de l'arbre d'entraînement.

2. Dispositif de débrayage (101) selon la revendication 1, **caractérisé en ce que** la connexion entre les bagues de palier (108, 112) côté dispositif de débrayage est réalisée au moyen d'un ressort (123).

3. Dispositif de débrayage (101) selon la revendication 2, **caractérisé en ce que** le ressort (123) est réalisé en tant que ressort filiforme qui s'étend au moins autour d'une partie du deuxième piston (105) et/ou du deuxième palier de débrayage (111), une extrémité (126) du ressort filiforme étant connectée à la bague de palier (108) côté dispositif de débrayage du premier palier de débrayage (107) et l'autre extrémité (127) du ressort filiforme étant connectée à la bague de palier (112) côté dispositif de débrayage du deuxième palier de débrayage (111).

4. Dispositif de débrayage (101) selon la revendication 2 ou 3, **caractérisé en ce que** le ressort est disposé entre la périphérie extérieure du deuxième palier de débrayage (111) et la périphérie intérieure du premier palier de débrayage (107).

5. Dispositif de débrayage (101) selon l'une quelconque des revendications précédentes, **caractérisé en ce qu'**un composant supplémentaire (125) destiné à augmenter le coefficient de friction est disposé entre le boîtier (102) et au moins une bague de palier (108, 112) de l'un des paliers de débrayage (107, 111).

6. Dispositif de débrayage (101) selon la revendication 5, **caractérisé en ce que** le composant supplémentaire (125) est fabriqué en plastique ou en caoutchouc.

7. Dispositif de débrayage (101) selon l'une quelconque des revendications précédentes, **caractérisé en ce que** les pistons (103, 105) sont montés dans le boîtier (102) de manière à pouvoir tourner autour de l'axe de rotation de l'arbre d'entraînement.

8. Dispositif de débrayage (201), pour l'actionnement d'un embrayage double dans la chaîne cinématique d'un véhicule automobile, pour déconnecter et connecter de manière sélective deux arbres, constitué d'un boîtier (202) disposé concentriquement autour d'un arbre d'entraînement, dans lequel boîtier est guidé un piston annulaire, à l'une des extrémités duquel est disposé un premier palier de débrayage qui est supporté sur un embrayage partiel de l'embrayage double, et d'un deuxième piston annulaire qui présente un diamètre annulaire plus petit que le premier piston annulaire et est guidé concentriquement dans le boîtier à l'aide du premier piston annulaire et à l'extrémité duquel est disposé un deuxième palier de débrayage qui est supporté sur un deuxième embrayage partiel de l'embrayage double, **caractérisé en ce que** les pistons comprennent au moins un guide latéral, et des éléments de pince (230) qui viennent en prise dans les guides latéraux des pistons sont disposés sur le boîtier (202) du dispositif de débrayage (201).

9. Dispositif de débrayage (201) selon la revendication 8, **caractérisé en ce que** le guide latéral est réalisé au moyen d'un renfoncement ou d'une rainure sur une surface latérale des pistons située à l'extérieur ou à l'intérieur dans la direction radiale, et les éléments de pince (230) viennent en prise dans le renfoncement ou la rainure en vue d'un engagement par complémentarité de formes dans la direction périphérique de la paroi latérale de piston.
